## Europäisches Patentamt

(19) **European Patent Office**

**Office européen des brevets**

(11) Veröffentlichungsnummer: **0 012 188**
**B1**

(12) **EUROPÄISCHE PATENTSCHRIFT**

(45) Veröffentlichungstag der Patentschrift:
**12.10.83**

(51) Int. Cl.³: **G 02 B 7/26**, G 02 B 27/14

(21) Anmeldenummer: **79104127.0**

(22) Anmeldetag: **24.10.79**

(54) **Verfahren zur Herstellung einer Lichtwellenleiterverzweigung.**

(30) Priorität: **29.11.78 DE 2851679**

(43) Veröffentlichungstag der Anmeldung:
**25.06.80 Patentblatt 80/13**

(45) Bekanntmachung des Hinweises auf die Patenterteilung:
**12.10.83 Patentblatt 83/41**

(84) Benannte Vertragsstaaten:
**FR GB**

(56) Entgegenhaltungen:
**DE-A-2 418 994**
**DE-A-2 507 158**
**DE-A-2 522 740**
**DE-A-2 614 051**
**DE-A-2 627 042**
**DE-A-2 754 923**
**GB-A-1 449 156**

**Patents Abstracts of Japan Band 2, Nr. 86, 14. Juli 1978,
Seite 3812 E 78
IBM TECHNICAL DISCLOSURE BULLETIN, Band 16, Nr.
1, 1973 New York H. H. BLOEM et al. «Fiber-optic coupler» Seiten 146 bis 147**

(73) Patentinhaber: **SIEMENS AKTIENGESELLSCHAFT,
Berlin und München Wittelsbacherplatz 2,
D-8000 München 2 (DE)**

(72) Erfinder: **Winzer, Gerhard, Dr., Günderodestrasse 16,
D-8000 München 82 (DE)**
Erfinder: **Auracher, Franz, Dr., Stapferstrasse 4,
D-8000 München 60 (DE)**

Verfahren zur Herstellung einer Lichtwellenleiterverzweigung

Die vorliegende Erfindung betrifft ein Verfahren zur Herstellung einer Lichtwellenleiterverzweigung nach dem Strahlteilerprinzip gemäss dem Oberbegriff des Patentanspruchs 1.

Ein Verfahren der genannten Art ist aus der JP-A-5350848 und den Patent Abstracts of Japan, Bd. 2, Nr. 86, 14. Juli 1978, S. 3812 E 78 bekannt. Bei diesem Verfahren werden die abzweigenden Führungskanäle nach dem Durchtrennen des Ausgangskörpers mit dem durchgehenden Führungskanal in den entstandenen Körperabschnitten erzeugt. Auch die Lichtwellenleiter werden nach dem Durchtrennen in die Abschnitte des durchgehenden Führungskanals und die abzweigenden Führungskanäle auf den Körpereinschnitten eingebracht und fixiert.

Aufgabe der Erfindung ist es, ein Verfahren der genannten Art zu schaffen, das kostengünstiger und besser zur Serienproduktion geeignet ist.

Diese Aufgabe wird durch die im kennzeichnenden Teil des Patentanspruchs 1 angegebenen Merkmale gelöst.

Dadurch wird erreicht, dass sämtliche Führungskanäle bereits auf dem Ausgangskörper in einem gemeinsamen Maskierungs- und Ätzschritt hergestellt werden können und ausserdem wird das Einlegen und Befestigen der Lichtwellenleiter vereinfacht. Auch die Zahl der brechenden Flächen, die den Koppelwirkungsgrad verschlechtern, ist von vorneherein reduziert und es muss daher auch nicht mit einem zusätzlichen Immersionsmittel Abhilfe dagegen geschaffen werden. Das Verfahren eignet sich zur industriellen Serienfertigung. Ein besonderer Vorteil des Verzweigerelements liegt in der selbstjustierenden Herstellung.

Bevorzugte und vorteilhafte Ausgestaltungen des Verfahrens gehen aus den Unteransprüchen 2 bis 9 hervor.

Ein Ausführungsbeispiel der Erfindung wird anhand der Figuren in der nachfolgenden Beschreibung näher erläutert. Es zeigen:

Fig. 1a bis c alle drei Seiten des für das Ausführungsbeispiel verwendeten Ausgangskörpers, in dem bereits die als Nuten ausgebildeten Führungskanäle eingebracht sind, wobei die Fig. 1a eine Draufsicht auf die mit den Nuten versehene Oberfläche des Ausgangskörpers, Fig. 1b die Ansicht der in Fig. 1a unteren Längsseite des Ausgangskörpers und Fig. 1c die Ansicht der in Fig. 1a rechten Querseite des Ausgangskörpers zeigen;

Fig. 2 den Ausgangskörper in der Darstellung gemäss Fig. 1a, wobei in den Nuten bereits Lichtwellenleiter eingelegt sind;

Fig. 3 eine der Fig. 1b entsprechende Seitenansicht des in Fig. 2 dargestellten Gebildes, bei dem zusätzlich die Lichtwellenleiter noch mit einem Deckkörper abgedeckt sind;

Fig. 4 in einer der Fig. 3 entsprechenden Darstellung die beiden durch einen Schnitt durch den Körper nach Fig. 3 voneinander getrennten Körperabschnitte, wobei die Schnittflächen bereits poliert sind;

Fig. 5 noch einmal die beiden Körperabschnitte nach Fig. 4, wobei auf die polierte Fläche des linken Abschnitts die teildurchlässige Schicht aufgebracht ist;

Fig. 6 in derselben Darstellung wie in Fig. 5 die fertige Lichtwellenleiterverzweigung und

Fig. 7 die Ansicht der unteren Längsseite der fertigen Verzweigung nach Fig. 6.

Das Ausführungsbeispiel wird anhand seiner Herstellung beschrieben. Der Ausgangskörper, aus dem es hergestellt wird, besteht aus einem Substrat 1, beispielsweise aus bearbeitbarer Glaskeramik [siehe beispielsweise G. H. Beall et al, Feinwerktechnik und Micronic, 76/3 (1972) 107), Pressglas oder sonstige masshaltige Keramiken, auf dem eine Schicht 2 aus Silizium oder aus einem anderen Kristallmaterial geätzt werden kann [siehe dazu D. L. Kendall, Appl. Phys. Lett. 26/ 4 (1975) 195]. In die Siliziumoberfläche 2 werden nun mittels eines anisotropen Ätzvorgangs Führungskanäle 3, 4 und 5 in Form von Nuten entsprechend der vorgesehenen Geometrie, d. h. schon jetzt relativ zueinander so angeordnet und bemessen, wie dies später bei der fertigen Verzweigung der Fall ist, eingeätzt. Beim Ausführungsbeispiel stehen die den abzweigenden Führungskanälen entsprechenden Nuten 4 und 5 senkrecht auf der durchgehenden Nut, welche dem durchgehenden Führungskanal 3 entspricht.

Da der Ausgangskörper dort, wo die Spiegelschicht vorgesehen ist, durch einen entsprechend geführten Schnitt in zwei Körperabschnitte zerlegt wird, muss beim Ausgangskörper von vorneherein ein Massverlust berücksichtigt werden, welcher von der endlichen Dicke des Trennwerkzeugs, beispielsweise einer Trennscheibe, und durch das Polieren der Schnittflächen herrührt. Dieser Massverlust wird dadurch berücksichtigt, dass der Ausgangskörper in Richtung des durchgehenden Führungskanals ein hinreichendes Stück länger gemacht wird, und die abzweigenden Führungskanäle in Richtung des durchgehenden Führungskanals gegeneinander versetzt werden, so dass sie in einem Abstand voneinander parallel verlaufen.

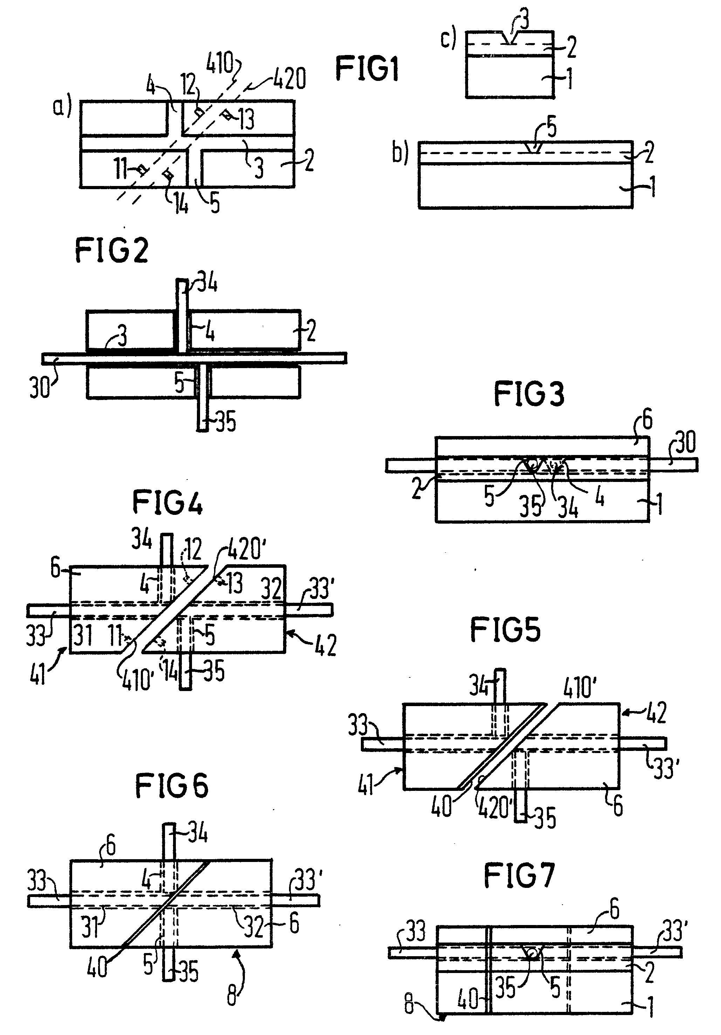

In der Fig. 1a sind die soeben geschilderten Verhältnisse durch die Spuren von sogenannten Polierendflächen 410 und 420 dargestellt. Diese Polierendflächen haben einen Abstand a voneinander, welcher genau dem durch das Schneiden und Polieren entstandenen Verlust entspricht. Die Polierendflächen werden so vorgegeben, dass sie die abzweigenden Führungskanäle 4 bzw. 5 nicht vor, sondern genau bei deren Einmündung in den durchgehenden Führungskanal 3 schneiden. Es dienen dazu sogenannte Poliermarken 11 bis 14, die aus Vertiefungen bestehen, welche die vorgesehenen Polierendflächen 410 bzw. 420 tangieren und damit auch deren Spuren abschliessen. Diese Poliermarken können gleichzeitig mit den Führungskanälen in die Oberfläche des Ausgangskörpers eingebracht werden.

In die Führungskanäle werden nun Lichtwellenleiter eingelegt, und zwar ein durchgehender Lichtwellenleiter 30 in den durchgehenden Kanal 3 und zwei abzweigende Lichtwellenleiter 34 und 35, welche an den Lichtwellenleiter 30 stumpf stossen. Als Lichtwellenleiter werden in erster Linie Glasfasern, insbesondere Stufenindex oder Gradientenindexprofilfasern verwendet.

Die eingelegten Lichtwellenleiter (Fig. 2) werden nun in den Kanälen befestigt, indem auf die Oberfläche des Ausgangskörpers ein Klebemittel, beispielsweise ein optischer Kitt oder Kleber, aufgebracht und dann das Ganze mit einem Deckplättchen abgedeckt wird, welches nach dem Aushärten des Kitts oder Klebers fest mit dem Ausgangskörper verbunden ist und die Wellenleiter sich zwischen Ausgangskörper und Deckplättchen befinden, wo sie unverrückbar in den Kanälen gehalten werden (Fig. 3).

Diese Herstellungszwischenstufe wird nun durch einen Schnitt mittels einer Trennscheibe in zwei Körperabschnitte 41, 42 zerlegt. Die Trennscheibe wird zwischen den beiden Polierendflächen 410 und 420, welche durch die Poliermarken 11 bis 14 markiert sind, angesetzt und parallel zu diesen Flächen sowie senkrecht zur Zeichenebene geführt. Die Trennflächen werden dann poliert und so auf optische Qualität gebracht. Das Polieren erfolgt ebenfalls parallel zu den Flächen 410 bzw. 420 sowie senkrecht zur Zeichenebene der Figuren. Es wird dabei so lange poliert, bis die Poliermarken 11 bis 14 gerade Öffnungen in den polierten Flächen bilden. Dies zeigt an, wann die Polierendflächen 410, 420 erreicht sind. Es sind so die beiden Körperabschnitte 41 und 42 mit den Trennflächen 410' und 420' nach Fig. 4 entstanden. Aus dem durchgehenden Führungskanal 3 sind die beiden Kanalabschnitte 31 und 32 entstanden. Aus dem durchgehenden Lichtwellenleiter 30 sind analog die beiden Lichtwellenleiterabschnitte 33 und 33' entstanden.

Auf eine der beiden polierten Trennflächen, beispielsweise auf die Trennfläche 410', wird nun durch Bedampfen mit einem geeigneten Metall, beispielsweise Aluminium, eine dünne Metallschicht aufgebracht, welche die teildurchlässige Spiegelschicht 40 bildet (Fig. 5).

Die beiden Körperabschnitte 42 und 41 mit der Metallschicht 40 werden auf eine Oberfläche eines mit einem geradlinig verlaufenden Anschlag versehenen Substrats gelegt, so dass sie am Anschlag anliegen und die polierten Trennflächen einander zugewandt sowie parallel zueinander sind. Durch Verschieben längs des Anschlags werden die Körperabschnitte zur Berührung miteinander gebracht, so dass die Verzweigung nach den Fig. 6 und 7 entsteht, wo der Körper der Verzweigung mit 8 bezeichnet ist. Die zusammengebrachten Körperabschnitte 42 und 41 mit 40 werden vorzugsweise durch Verkleben mittels optischem Kleber fest miteinander verbunden. Bei dem Ausführungsbeispiel nach Fig. 6 und 7 fluchten die Kanalabschnitte 31 und 32, aber auch die abzweigenden Führungskanäle 4 und 5 und mit ihnen die Lichtwellenleiter 33, 33 ' bzw. 34 und 35. Die abzweigenden Führungskanäle 4 und 5 sind senkrecht zu den Kanalabschnitten 31 und 32. Die Siegelschicht 40 ist um 45° zu den Kanalabschnitten 31, 32 und abzweigenden Führungskanälen 4, 5 geneigt, und zwar so, dass eine Flächennormale einer jeden der beiden voneinander abgewandten Oberflächen der Spiegelschicht 40 den 45°-Winkel halbiert. Die Spiegelschicht 40 kann sich auch nur über einen Teil der polierten Trennflächen 410', 420' erstrecken, so dass sie nur einen Teil des Querschnitts der Lichtwellenleiter 33 bzw. 33' überdeckt und damit ein Teil des in diesen geführten Lichts gar nicht auf die Spiegelschicht trift, sondern ungehindert von einem Lichtwellenleiter zum anderen sich ausbreitet.

Anstelle eines Ausgangskörpers, welcher eine Kristalloberfläche besitzt, die anisotrop ätzbar ist, wie beispielsweise Silizium, kann auch ein Ausgangskörper mit einer Oberfläche aus fotoempfindlichem, ätzbarem Glas verwendet werden, in welche die Nuten ebenfalls fotolithografisch, aber ohne Vorzugsätzen eingeätzt werden. Ausserdem können die Nuten auch vorteilhaft durch Prägen in plastisch verformbare Materialien hergestellt werden. Die für diese anderen Möglichkeiten zu verwendenden Ausgangskörper hätten dieselbe Form wie der in den Fig. 1a bis c dargestellte, mit dem Unterschied, dass die Schicht 2 aus anderen Materialien bestünde.

Der Ausgangskörper muss nicht schichtförmig aufgebaut sein. Er kann durchaus homogen aus einem Material bestehen, wie beispielsweise aus Silizium.

**Patentansprüche**

1. Verfahren zur Herstellung einer Lichtwellenleiterverzweigung nach dem Strahlteilerprinzip, bei dem auf einem Ausgangskörper ein durchgehender Führungskanal für Lichtwellenleiter ausgebildet und danach der Ausgangskörper schräg zum Führungskanal durchtrennt wird, bei dem auf einer der einander gegenüberliegenden Trennflächen eine teildurchlässige Spiegelschicht aufgebracht wird, worauf die Körperabschnitte wieder so zusammengefügt werden, dass die Abschnitte des ursprünglich durchgehenden Führungskanals fluchten, dadurch gekennzeichnet, dass von dem vor dem Durchtrennen des Ausgangskörpers (2) durchgehenden Führungskanal (3) in entgegengesetzten Richtungen abzweigende, gegeneinander versetzte, parallele Führungskanäle (4, 5) ausgebildet werden, dass in dem durchgehenden Führungskanal (3) ein durchgehender Lichtwellenleiter (30) und in den abzweigenden Führungskanälen (4, 5) je ein abzweigender Lichtwellenleiter (34 bzw. 35) befestigt werden, wobei das Material des Ausgangskörpers die gleichen Poliereigenschaften wie die Lichtwellenleiter aufweist, und dass der Ausgangskörper (2) zwischen den versetzten abzweigenden Führungskanälen (4, 5) derart durchtrennt und die entstehenden Trennflächen (410', 420') soweit abpoliert werden, dass die abzweigenden Führungskanäle (4, 5) nach Aufbringen der teildurchlässigen Spiegelschicht (40) und Zusammenfügen der Körperabschnitte (41, 42) miteinander fluchten.

2. Verfahren nach Anspruch 1, dadurch gekennzeichnet, dass die in die Führungskanäle (3, 4, 5) des Ausgangskörpers (2) eingelegten Lichtwellenleiter (30, 34, 35) durch einen Deckkörper (6) befestigt werden, der die eingelegten Lichtwellenleiter abdeckt und mit dem Ausgangskörper (2) fest verbunden wird.

3. Verfahren nach Anspruch 1 oder 2, dadurch gekennzeichnet, dass ein Ausgangskörper (1 mit 2) verwendet wird, der eine Kristalloberfläche aufweist, in welcher die Führungskanäle (3, 4, 5) in Form von Nuten durch anisotropes Ätzen (Vorzugsätzen) ausgebildet werden.

4. Verfahren nach Anspruch 1 oder 2, dadurch gekennzeichnet, dass ein Ausgangskörper (1 mit 2) verwendet wird, der eine Oberfläche aus fotoempfindlichem, ätzbarem Glas aufweist, in welche die Führungskanäle (3, 4, 5) in Form von Nuten eingeätzt werden.

5. Verfahren nach Anspruch 1 oder 2, dadurch gekennzeichnet, dass ein Ausgangskörper (1 mit 2) verwendet wird, der eine plastisch verformbare Oberfläche aufweist, in welche die Führungskanäle in Form von Nuten eingeprägt werden.

6. Verfahren nach einem der vorhergehenden Ansprüche, dadurch gekennzeichnet, dass vorgesehene Polierendflächen (410, 420), mit denen die polierten Trennflächen (410', 420') zusammenfallen sollen, durch Poliermarken (11, 12; 13, 14) auf dem Ausgangskörper (1 mit 2) gekennzeichnet werden.

7. Verfahren nach Anspruch 6, dadurch gekennzeichnet, dass als Poliermarken (11, 12; 13, 14) Vertiefungen verwendet werden, die in den Ausgangskörper (2) eingebracht sind und welche die Polierendflächen (410, 420) tangieren.

8. Verfahren nach einem der vorhergehenden Ansprüche, dadurch gekennzeichnet, dass ein Ausgangskörper (2) verwendet wird, der zwei im Winkel zueinander stehende, sauber bearbeitete Anschlagflächen besitzt, parallel zu denen der durchgehende Führungskanal (3) verläuft, dass zum Zusammenbringen der beiden Körperabschnitte (41, 42) jeder mit einem seiner Anschlagflächenabschnitte auf die Oberfläche einer mit einem geradlinig verlaufenden Anschlag versehenen Unterlage gelegt wird, während der andere Anschlagflächenabschnitt an diesen Anschlag angelegt wird, derart, dass die polierten Trennflächen (410', 420') parallel zueinander sind, und dass dann durch Verschieben längs des Anschlags beide Körperabschnitte (41, 42) in Kontakt miteinander gebracht werden.

9. Verfahren nach Anspruch 8, dadurch gekennzeichnet, dass als Ausgangskörper (1 mit 2) ein Quader verwendet wird.

**Claims**

1. A process for the production of a light waveguide branching in accordance with the beam splitting principle, in which a continuous guide channel for light waveguides is formed on a starting body which is subsequently divided transversely to the guide channel, in which a partially transmissive reflective layer is applied on one of the opposed surfaces of separation, whereupon the parts of the body are again so joined together that the parts of the originally continuous guide channel are in alignment, characterised in that parallel guide channels (4, 5), which are displaced relative to one another and branch off from the continuous guide channel (3) in opposite directions, are formed prior to the division of the starting body (2); that a continuous light waveguide (30) is fixed in the continuous guide channel (3) and a respective branching light waveguide (34 and 35) is fixed in each of the branching guide channels (4, 5), the material of the starting body having the same polishing characteristics as the light waveguides; and that the starting body (2) between the staggered, branching guide channels (4, 5) is so divided and the surfaces of separation (410', 420') formed, are polished away to such an extent that, after the application of the partially transmissive reflective layer (40) and the joining of the body parts (41, 42), the branching guide channels (4, 5) are in alignment with one another.

2. A process as claimed in claim 1, characterised in that the light waveguides (30, 34, 35) inserted into the guide channels (3, 4, 5) of the starting body (2) are secured by a covering body (6) which covers the inserted light waveguides and is fixedly connected to the starting body (2).

3. A process as claimed in claim 1 or claim 2, characterised in that a starting body (1 and 2) is used which has a crystal surface, in which the guide channels (3, 4, 5) are produced in the form of grooves by anisotropic etching (preferential etching).

4. A process as claimed in claim 1 or claim 2, characterised in that a starting body (1 and 2) is used which has a surface which is made of photosensitive, etchable glass, into which the guide channels (3, 4, 5) are etched in the form of grooves.

5. A process as claimed in claim 1 or claim 2, characerised in that a starting body (1 and 2) is used which has a plastically deformed surface in which the guide channels are impressed in the form of grooves.

6. A process as claimed in one of the preceding claims, characterised in that predetermined polishing faces (410, 420), with which the polished separating surfaces (410', 420') are to coincide, are indicated on the starting body (1 and 2) by polishing marks (11, 12; 13, 14).

7. A process as claimed in claim 6, characterised in that recesses are used as polishing marks (11, 12; 13, 14), which recesses are formed in the starting body (2) and which are tangent to the polishing faces (410, 420).

8. A process as claimed in one of the preceding claims, characterised in that a starting body (2) is used which has two cleanly worked stop surfaces which are at an angle to one another and to which the continuous guide channel (3) runs parallel; that, in order to join the two body sections (41, 42) together, one of them, is placed by means of one of its stop surface sections on the surface of a substrate which is provided with a rectilinear stop, whilst the other stop surface section is laid on this stop in such manner that the polished separating surfaces (410', 420') are parallel to one another; and that both body sections (41, 42) are brought into contact with one another by movement along the stop.

9. A process as claimed in claim 8, characterised in that as the starting body (1 and 21), a parallelepiped is used.

## Revendications

1. Procédé pour la fabrication d'une dérivation pour fibres optiques selon le principe du séparateur de rayons, dans lequel on forme sur un corps de départ un canal de guidage continu pour des fibres optiques et on sépare ensuite ce corps de départ obliquement par rapport au canal de guidage, dans lequel on dépose sur l'une des deux surfaces de séparation situées l'une en face de l'autre, une couche semi-réfléchissante, après quoi les sections du corps sont assemblées à nouveau de telle manière que les sections du canal de guidage continues initiales soient en alignement, caractérisé par le fait qu'avant la séparation du corps de départ (2) se forment, à partir du canal de guidage continu (3), des canaux de guidage (4, 5) parallèles, décalés entre eux et s'étendant suivant des directions de dérivation opposées, que dans le canal de guidage continu (3) on fixe une fibre optique continue (30) et dans les canaux de guidage de dérivation (4, 5) respectivement une fibre optique dérivée (34, 35), le matériau du corps de départ présentant les mêmes propriétés de polissage que les fibres optiques, et que le corps de départ (2) est séparé entre les canaux de guidage décalés et dérivés de telle manière et les surfaces de séparation (410', 420') qui se forment sont polies à un degré tel que les canaux de guidage dérivés (4, 5) sont alignés entre eux après le dépôt de la couche semi-réfléchissante (40) et assemblage des sections de corps (41, 42).

2. Procédé selon la revendication 1, caractérisé par le fait que les fibres optiques (30, 34, 35) qui sont placées dans les canaux de guidage (3, 4, 5) du corps de départ (2), sont fixées par un corps (6) formant couvercle, qui recouvre les fibres optiques mises en place, et qui est relié de façon ferme au corps de départ (2).

3. Procédé selon la revendication 1 ou 2, caractérisé par le fait que l'on utilise un corps de départ (1 avec 2) qui possède une surface cristalline dans laquelle les canaux de guidage (3, 4, 5) sont réalisés, sous la forme de gorges, par une attaque chimique anisotrope (attaque chimique préférentielle).

4. Procédé selon la revendication 1 ou 2, caractérisé par le fait que l'on utilise un corps de départ (1 avec 2) qui comporte une surface en un verre photosensible et susceptible d'attaque chimique, surface dans laquelle sont réalisés, par attaque chimique, les canaux de guidage (3, 4, 5) sous la forme de gorges.

5. Procédé selon la revendication 1 ou 2, caractérisé par le fait que l'on utilise un corps de départ (1 avec 2) qui présente une surface qui est susceptible d'être déformée plastiquement, dans laquelle les canaux de guidage sont réalisés par repoussage, sous la forme de gorges.

6. Procédé selon l'un des revendications précédentes, caractérisé par le fait que des surfaces d'extrémité à polir qui sont prévues (410, 420), avec lesquelles doivent coïncider les surfaces de séparation polies (410', 420'), sont repérées par des repères de polissage (11, 12; 13, 14) sur le corps de départ (1 avec 2).

7. Procédé selon la revendication 6, caractérisé par le fait que comme repères de polissage (11, 12; 13, 14) on utilise des dépressions qui sont réalisées dans le corps de départ (2) et qui sont tangentes avec les surfaces d'extrémité à polir (410, 420).

8. Procédé selon l'une des revendications précédentes, caractérisé par le fait que l'on utilise un corps de départ (2) qui possède deux surfaces de butée faisant un angle entre elles et qui ont été traitées avec soin et par rapport auxquelles s'étend parallèlement le canal de guidage continu (3), que pour l'assemblage des deux sections de corps (41, 42) chacune d'elles est placée, par une section de sa surface de butée, sur la surface d'un support qui est pourvue d'une butée s'étendant en ligne droite, alors que l'autre section de surface de butée est placée contre cette butée de telle façon que les surfaces de séparation polies (410', 420') sont parallèles entre elles et qu'ensuite, par déplacement le long de la butée, les deux sections de corps (41, 42) sont amenées en contact entre elles.

9. Procédé selon la revendication 8, caractérisé par le fait que le corps de départ (1 avec 2) est un parallélépipède.

0 012 188

FIG1

FIG2

FIG3

FIG4

FIG5

FIG6

FIG7